# DEMANDE DE BREVET EUROPEEN

(11) **EP 1 106 467 A1**
(43) Date de publication de la demande: **13.06.2001**
(21) Numéro de dépôt: 00402927.8
(22) Date de dépôt: 23.10.2000
(51) Int. Cl.: B61F 19/06, B61D 15/06, B60R 19/38

(54) **Dispositif de déformation contrôlée sous efforts ou d'absorption d'énergie par déformation, notamment déflecteur d'obstacles pour véhicule ferroviaire**

(30) Priorité: 30.11.1999 FR 9915085
(71) Demandeur: A.N.F. INDUSTRIE, F-59154 Crespin (FR)
(72) Inventeur: Debroux, Alain Francois Auguste, 1970 Wesembeek-Oppem (BE)
(74) Mandataire: Bertrand, Didier

(57) **Abrégé**

Ce dispositif est un déflecteur d'obstacles (10) qui comprend un bouclier sous forme de caisson rigide (11) mobile disposé transversalement au véhicule et dont la course en cas de choc est transformée en rotation autour d'un axe de tangage, grâce à une articulation, le mouvement du bouclier se faisant à l'encontre de quatre barres de torsion (18, 23) interposées dans une liaison mécanique entre le bouclier et le châssis (2).

## Description

La présente invention un dispositif de déformation contrôlée sous efforts ou d'absorption d'énergie par déformation, du type mettant en oeuvre la déformation d'au moins un organe dans les domaines élastique et plastique.

On connaît déjà, dans les domaines automobile et ferroviaire notamment, des dispositifs d'absorption d'énergie par déformation plus ou moins contrôlée d'organes déformables. Dans de nombreux exemples, la déformation est une compression d'un organe déformable généralement allongé, déformation qui peut être provisoire (compression élastique) ou permanente (compression plastique) ; on en trouvera des exemples dans les documents US 4 182 529 ; EP 0831005 ; FR 2760420 ; FR 2759659 et FR 2759660 ; la compression globale de l'organe avec absorption d'énergie met en jeu divers mécanismes d'absorption d'énergie tels que l'écrasement de matériaux spécifiques, notamment alvéolaires, le frottement de matériaux entre eux, le cisaillement de pièces, etc. Les organes déformables peuvent être prévus pour assurer d'abord une certaine résistance au choc, jusqu'à un point critique où ils se déforment irréversiblement par exemple par flambage, cisaillement, etc. Dans presque tous les cas, les organes déformables doivent être disposés dans la direction du mouvement et de l'impact, c'est-à-dire longitudinalement, et il faut prévoir dans la construction un espace longitudinal important pour loger lesdits organes.

On connaît aussi, par les documents FR 2653729 et FR 2699878 un chasse-pierres, disposé juste à l'avant d'une roue de véhicule ferroviaire, dont la pièce d'impact doit pouvoir contrôler une force de 1500 daN sur une longueur de course de 100 mm ; pour ce faire, la pièce d'impact est portée au bout d'un bras articulé sur un axe, le bras étant fixé en position par des goujons travaillant en cisaillement et dont la déformation, quand l'effort est supérieur à leur limite élastique, permet au bras de tourner de manière permanente. Ce système est adapté aux petits chocs (dus par exemple à une pierre) s'exerçant sur une pièce d'impact de surface très limitée et avec une force relativement faible ; il serait en revanche inadapté pour constituer un déflecteur destiné à des obstacles plus importants, tels qu'un animal ou une voiture se trouvant sur la voie, qui risquent de provoquer un déraillement du train. Pour ces obstacles, il est souhaitable de trouver un déflecteur d'obstacles aussi grand que possible tout en restant à l'intérieur du gabarit et capable de résister sans déformation permanente à des efforts, soit uniformément répartis, soit localisés en n'importe quel point de son arête inférieure, de l'ordre de 300 kN pour une vitesse maximale d'exploitation de 145 km/h à 600 kN pour une vitesse de 200 km/h et plus. De plus, il est souhaitable que, une fois la déformation progressive commencée, la résistance au déplacement ne soit pas inférieure à 80% de ces efforts, et ce, sur une course d'au moins 150 mm.

Le but de l'invention est de proposer un autre type d'organe déformable que les organes connus, qui ne présente plus l'inconvénient d'un encombrement longitudinal important et qui permette une résistance élevée sans déformation permanente sous un encombrement relativement faible.

L'invention atteint son but en utilisant comme organe déformable au moins une barre de torsion, et de préférence plusieurs. On s'arrange pour transformer un déplacement longitudinal engendré par un effort ou un choc en une rotation mettant en jeu la barre de torsion ; la rotation de la barre de torsion implique une réponse élastique jusqu'à un certain seuil, au-delà duquel la torsion entre dans le domaine plastique. La barre de torsion, avantageusement une barre pleine ou sensiblement pleine en acier, est un organe très efficace par rapport à son encombrement, et elle peut de plus être disposée dans un sens transversal à la direction du déplacement ou de la force du choc.

De façon particulièrement avantageuse, la barre de torsion est d'abord précontrainte en torsion, c'est-à-dire qu'avant son utilisation, on la tord jusqu'à la faire entrer dans le domaine de plastification et on la relâche ensuite. Les contraintes résiduelles qui en résultent dans la barre et dont le sens s'inverse au sein de la barre, à une certaine distance de son axe, lui permettent d'avoir lors de l'utilisation un comportement beaucoup plus marqué autour de la limite élastique, avec une limite élastique apparente supérieure à la limite obtenue sans précontrainte. Pour obtenir cette précontrainte, il est nécessaire que la barre ne soit pas essentiellement annulaire. Pour l'objet de la présente invention, on englobera sous le terme de barres, non seulement les barres vraies (profilés plein) mais aussi les profilés fermés (profilés creux) ou ouverts qui peuvent néanmoins être précontraints en torsion, c'est-à-dire présenter après la précontrainte des contraintes résiduelles de sens opposé au coeur ou en surface.

L'invention trouve une application remarquable dans la réalisation d'un déflecteur d'obstacle fixé au châssis d'un véhicule, notamment ferroviaire.

Le déflecteur comprend un bouclier mobile disposé transversalement au véhicule et dont la course en cas de choc est transformée en rotation autour d'un axe de tangage, grâce à une articulation, le mouvement du bouclier se faisant à l'encontre d'au moins une barre de torsion interposée dans une liaison mécanique entre le bouclier et le châssis.

Le bouclier est réalisé par un caisson rigide afin de permettre la répartition la plus uniforme possible d'un effort qui peut être lui-même localisé. On appelle caisson rigide au sens de l'invention un caisson dont la rigidité en torsion est telle que, durant le fonctionnement du dispositif, ses déformations sont négligeables par rapport aux déformations de la ou des barres de torsion. Afin de permettre aux deux longerons du châssis de reprendre l'un et l'autre les efforts de façon équilibrée, la liaison mécanique entre le bouclier et le châssis est avantageusement symétrique par rapport à un plan médian du véhicule.

Avantageusement, la liaison mécanique comprend des premières barres de torsion disposées sensiblement parallèlement au bouclier entre un premier point de celui-ci et un premier point du châssis, doublées par des secondes barres de torsion également disposées sensiblement parallèlement au bouclier entre un second point de celui-ci et un second point du châssis, les premiers points du bouclier et du châssis étant décalés transversalement par rapport aux seconds points du bouclier et du châssis. Par exemple, ledit premier point du bouclier se trouve à une extrémité de celui-ci, et le premier point correspondant du châssis, se trouve à un tiers de sa largeur, et ledit second point du bouclier se trouve au tiers de sa largeur tandis que le second point du châssis se trouve à son extrémité.

On arrive de la sorte à ce que, bien que l'effort appliqué sur le bouclier puisse être soit uniformément réparti sur les faces avant ou localisé en n'importe quel point de l'arête inférieure, le fonctionnement du dispositif soit aussi peu sensible que possible à la localisation de la force appliquée, en particulier peu sensible à la localisation transversale de l'effort. L'effort agissant sur le déflecteur d'obstacles est situé très bas par rapport au châssis du véhicule. Cet effort induit donc un moment très important qui est néanmoins bien repris par le dispositif conforme à l'invention.

L'invention sera mieux comprise et d'autres avantages et caractéristiques seront mis en évidence à la lecture de la description suivante d'un exemple de réalisation de l'invention. On se référera aux dessins annexés sur lesquels :
- la figure 1 est une vue schématique de l'avant d'un véhicule ferroviaire montrant l'emplacement du déflecteur d'obstacles conforme à l'invention,
- la figure 2 est une vue en perspective schématique d'un mode de réalisation préféré de déflecteur d'obstacles selon l'invention,

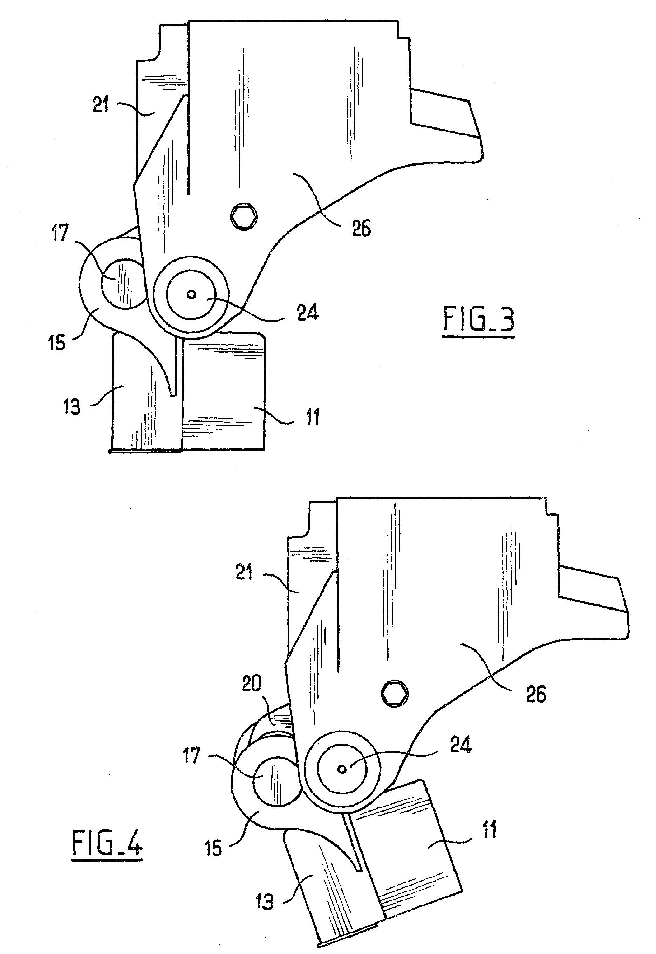

- les figures 3 et 4 représentent en vue de bout le déflecteur de l'invention en position normale et en position fléchie après un choc,
- la figure 5 est une vue analogue à celle de la figure 2, montrant le déflecteur fléchi après un choc,
- la figure 6 est un graphique déplacement/effort illustrant le comportement du déflecteur d'obstacle, comparant le cas d'un déflecteur à barres non précontraintes par rapport à un déflecteur à barres précontraintes.

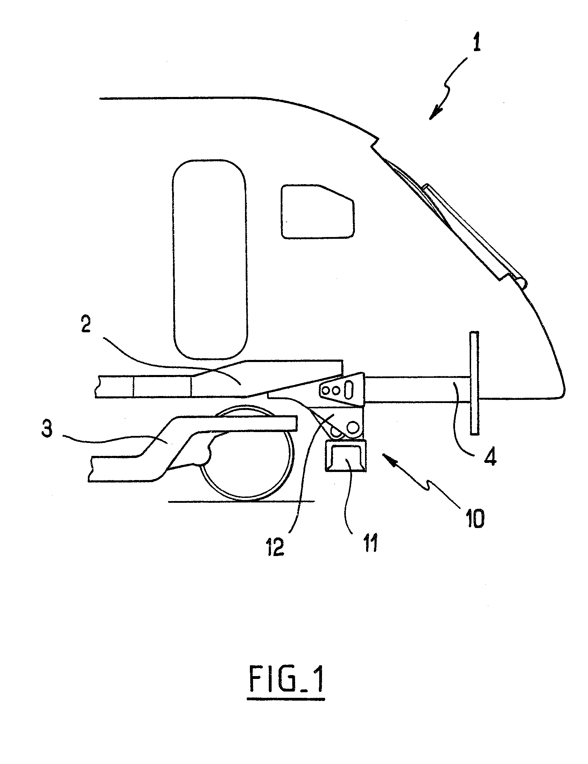

La figure 1 montre l'avant 1 d'un véhicule ferroviaire de tête dont le châssis 2 (longerons) est supporté à l'avant sur un bogie 3. A l'avant du châssis, une structure d'extrémité déformable 4 est prévue pour absorber une certaine quantité d'énergie en cas d'accident, par écrasement progressif. A l'arrière de cette structure déformable 4 mais à l'avant du bogie 3 se trouve le déflecteur d'obstacle 10 conforme à l'invention, destiné à fonctionner indépendamment de la structure 4 et disposé sous le châssis 2. Le déflecteur 10 est donc confiné dans un espace limité en avant par la structure 4, en arrière par le bogie 3, au-dessus par le châssis 2 et ne pouvant s'étendre que dans la direction transversale dans la largeur du châssis.

Le déflecteur 10 est constitué d'un bouclier en forme de caisson 11 relié à une partie indéformable du châssis 2 (liée au caisson de traction à l'avant des longerons) par une liaison complexe 12 destinée à répartir sur toute la largeur de la structure un choc éventuellement ponctuel sur le bouclier, subi en un point quelconque, et à offrir une capacité d'absorption d'énergie de choc particulière.

Le caisson 11 comporte une paroi avant 13 formant un angle saillant obtus, une paroi supérieure 14, et des parois inférieure et arrière non visibles sur la figure 1. Il peut être renforcé par des raidisseurs intérieurs soudés ou autrement fixés, de manière à lui donner une grande raideur.

Sur les parois 13 et 14 du caisson 11 sont fixées des oreilles extérieures 15 et intérieures 16 respectivement aux extrémités et aux tiers de la largeur dudit caisson. Une extrémité 17 d'une première barre de torsion 18, ou barre avant, est fixée à l'oreille 15, tandis que son autre extrémité 19 est fixée, par l'intermédiaire d'une pièce de montage 20, à une joue intérieure 21 elle-même fixée au châssis 2. Une extrémité 22 d'une seconde barre de torsion 23, ou barre arrière, est fixée dans l'oreille 16, et son autre extrémité 24 est immobilisée grâce à une pièce de montage 25 dans une joue extérieure 26 fixée sous le châssis 2. Des plaques-crochets extérieures 27 et intérieures 28 fixées (de manière non représentée) au châssis 2 forment un palier ouvert de réception de la seconde barre de torsion 23 et immobilisent aussi les oreilles 15 et 16 en translation. Un trou 29 dans l'oreille extérieure 15 permet la traversée de la seconde barre de torsion 23.

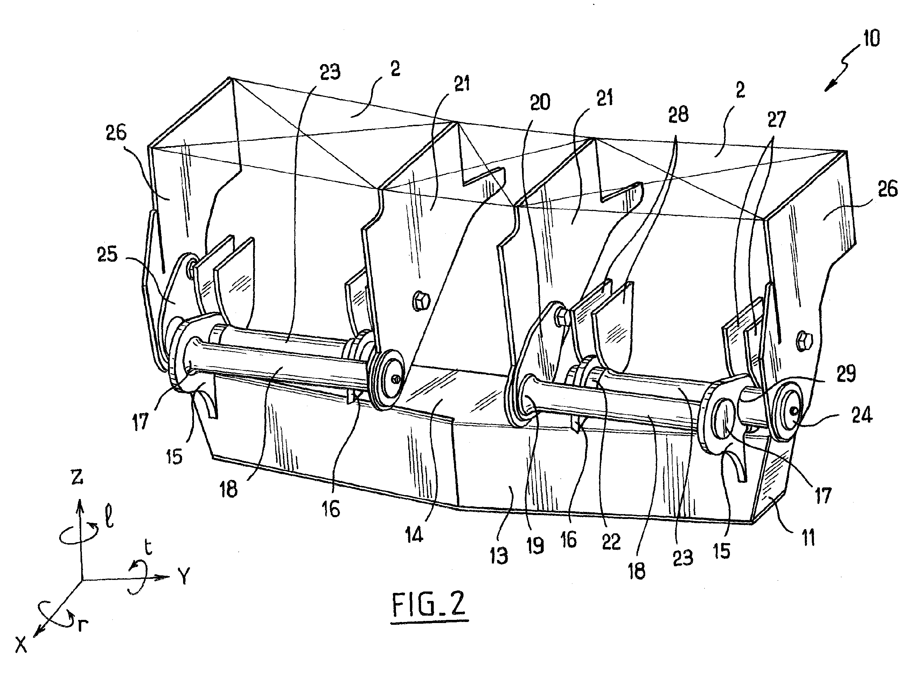

Les plaques de palier 27 et 28 assurent la fixation par blocage direct des degrés de liberté en translation (selon les trois axes X, Y, Z représentés sur la figure 2). Les joues 21 et 26 assurent à la fois la fixation par blocage des degrés de translation, mais également, par l'intermédiaire des barres de torsion, le blocage du degré de liberté de rotation suivant l'axe de tangage t du véhicule.

Les barres de torsion arrière 23 assurent cinq fonctions : reprise des efforts cisaillants longitudinaux, palier de rotation, transmission des moments vers les longerons gauche et droit, reprise d'une partie des efforts cisaillants verticaux, reprise d'une partie des efforts cisaillants latéraux.

Les barres de torsion avant 18 assurent trois fonctions : transmission des moments vers le caisson de traction, reprise d'une partie des efforts cisaillants verticaux, et reprise d'une partie des efforts cisaillants latéraux.

Le déplacement horizontal requis du bouclier est donc transformé par un mécanisme de levier en une rotation autour de l'axe de tangage situé à l'endroit des points de fixations 26, 27, 28.

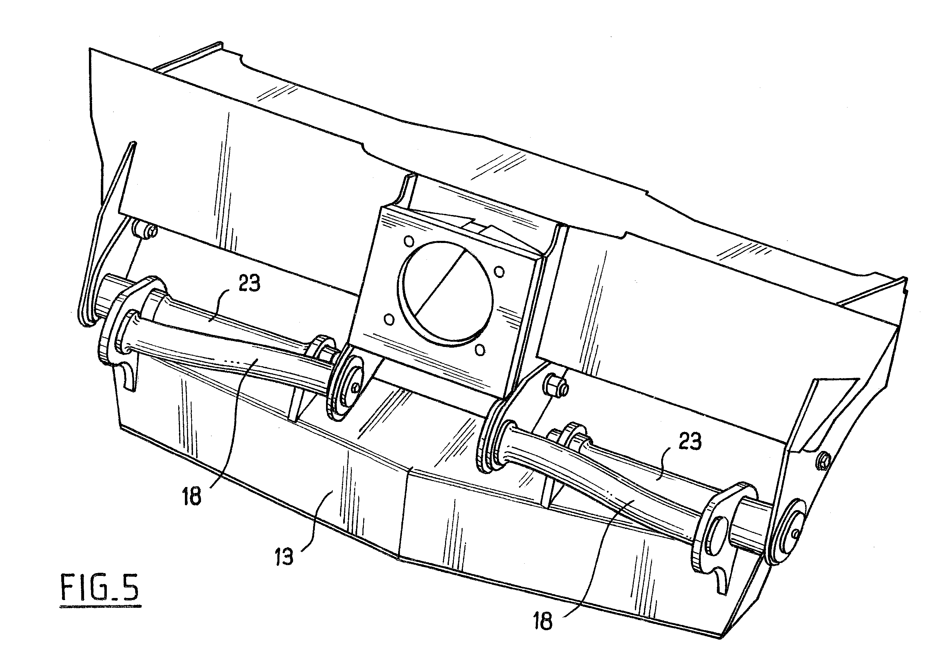

Cette rotation sollicite en torsion les barres de torsion arrière 23, en acier, qui, en se déformant dans le domaine plastique, absorbent l'énergie demandée. Le point de fixation des barres avant 18 n'étant pas aligné avec l'axe de rotation du déflecteur d'obstacles, celles-ci sont non seulement tordues mais aussi fléchies, comme le montre bien la figure 5.

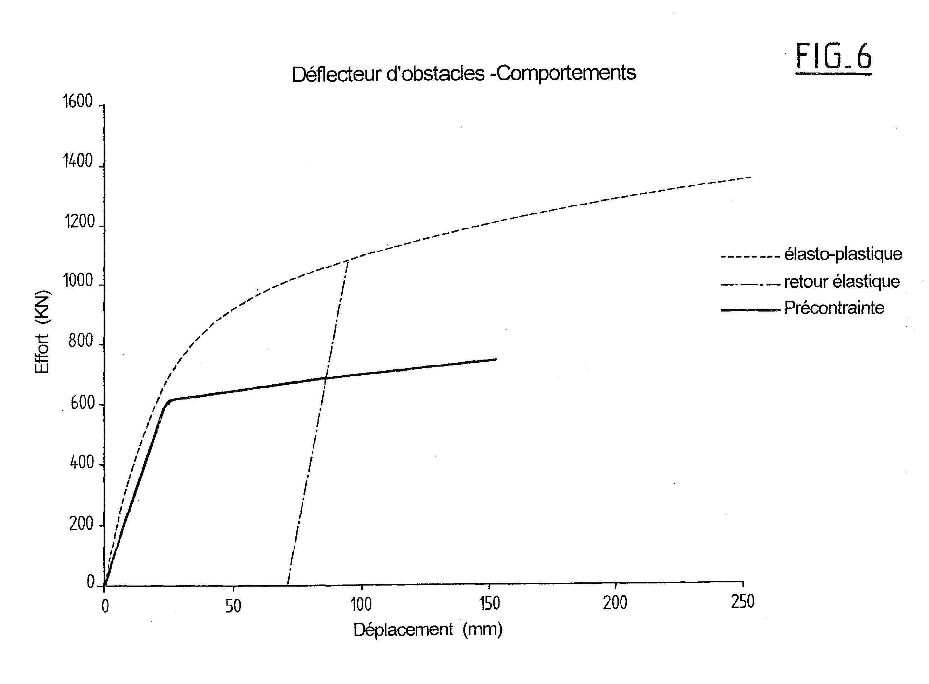

La figure 6 illustre le comportement (en traits pointillés) d'un déflecteur d'obstacles équipé de barres de torsion. Les barres de torsion sont dimensionnées de telle sorte que la fibre extrême soit sollicitée à la limite élastique pour un effort atteignant 600kN. La valeur maximum de la courbe correspond à la rupture en torsion de la barre. Ce comportement n'est pas satisfaisant dans le domaine de fonctionnement plastique du déflecteur car les efforts atteints en fin de course sont trop importants. Un comportement beaucoup plus marqué autour de la limite élastique est souhaitable. La figure indique également le comportement (en traits d'axe) d'un déflecteur sollicité jusqu'à un effort dépassant sa limite en plastification et relâché ensuite. Ce déflecteur, lorsqu'il sera sollicité à nouveau, aura un comportement élastique jusqu'à l'effort maximum vu précédemment et puis plastifiera à nouveau à partir de cette valeur. La limite élastique apparente sera beaucoup plus importante. Il suffit donc d'équiper le déflecteur de barres de diamètre plus faible (et donc plus légères), précontraintes en torsion, pour avoir le comportement désiré. La courbe en traits continu illustre le comportement d'un tel déflecteur, soit, souplesse plus importante dans le domaine élastique et variation brutale dès la limite élastique apparente atteinte.

On a décrit jusque là un mode préféré de réalisation de l'invention, mais dans certains cas, on peut se contenter de dispositifs plus simples mettant en oeuvre le principe de base de l'invention, à savoir l'utilisation de barres de torsion.

## Revendications

1. Dispositif de déformation contrôlée sous efforts ou d'absorption d'énergie par déformation, du type mettant en oeuvre la déformation d'au moins un organe dans les domaines élastique et plastique, caractérisé en ce que ledit organe est une barre de torsion (18, 23).

2. Dispositif selon la revendication 1, caractérisé en ce que ladite barre de torsion (18, 23) est précontrainte en torsion.

3. Dispositif selon l'une quelconque des revendications 1 ou 2, caractérisé en ce qu'il s'agit d'un déflecteur d'obstacle (10) fixé au châssis (2) d'un véhicule, notamment ferroviaire.

4. Dispositif selon la revendication 3, caractérisé en ce qu'il comprend un bouclier mobile (11) disposé transversalement au véhicule et dont la course en cas de choc est transformée en rotation autour d'un axe de tangage, grâce à une articulation, le mouvement du bouclier (11) se faisant à l'encontre d'au moins une barre de torsion (18, 23) interposée dans une liaison mécanique (12) entre le bouclier (18) et le châssis (2).

5. Dispositif selon la revendication 4, caractérisé en ce que le bouclier est réalisé par un caisson rigide (11).

6. Dispositif selon l'une quelconque des revendications 4 ou 5, caractérisé en ce que la liaison mécanique (12) entre le bouclier (11) et le châssis (2) est symétrique par rapport à un plan médian du véhicule.

7. Dispositif selon l'une quelconque des revendications 4 à 6, caractérisé en ce que la liaison mécanique (12) comprend des premières barres de torsion (18) disposées sensiblement parallèlement au bouclier (11) entre un premier point (15) de celui-ci et un premier point (21) du châssis (2), doublées par des secondes barres de torsion (23) également disposées sensiblement parallèlement au bouclier (11) entre un second point (16) de celui-ci et un second point (26) du châssis (2), les premiers points du bouclier et du châssis étant décalés transversalement par rapport aux seconds points du bouclier et du châssis.
